# FASCICULE DE BREVET EUROPEEN

(11) **EP 0 474 851 B1**
(45) Date de publication et mention de la délivrance du brevet: **01.03.1995**
(21) Numéro de dépôt: 91907599.4
(22) Date de dépôt: 02.04.1991
(51) Int. Cl.: F16L 1/16

(54) **PROCEDE DE MANIPULATION DE CONDUITES TUBULAIRES FLEXIBLES EN UTILISANT UNE CONDUITE TUBULAIRE FLEXIBLE**
VERFAHREN ZUR HANDHABUNG FLEXIBLER ROHRLEITUNGEN UNTER VERWENDUNG EINER FLEXIBLEN ROHRLEITUNG
PROCESS FOR HANDLING FLEXIBLE CONDUITS USING A FLEXIBLE CONDUIT

(30) Priorité: 30.03.1990 FR 9004100
(43) Date de publication de la demande: 18.03.1992
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR)
(74) Mandataire: Nony, Michel
(86) Numéro de dépôt international: FR9100260
(87) Numéro de publication internationale: WO9115694

(56) Documents cités:
- EP-A- 0 302 784
- FR-A- 2 200 470
- US-A- 3 751 932
- US-A- 3 777 499
- PETROLE ET TECHNIQUES. vol. 250, 01 février 78, PARIS FR pages 9 - 17; REYNARD ET AL: "LES FLEXIBLES COFLEXIP"

## Description

L'invention se rapporte principalement à une conduite tubulaire flexible de manoeuvre notamment d'abandon, ainsi qu'à un dispositif et un procédé utilisant une telle conduite.

Il est connu de déposer des conduites tubulaires flexibles sur le fond d'une étendue d'eau comme par exemple le fond marin ou le fond d'un lac, en vue de transporter un fluide. Le fluide transporté est par exemple, de l'eau, des hydrocarbures liquides ou gazeux ou de l'air. De telles conduites tubulaires flexibles sont décrites, par exemple, dans le brevet français n° 83 16883 (publié sous le n° FR-A-2 553 859). Les opérations de pose d'une telle conduite tubulaire flexible doivent pouvoir être interrompues d'urgence, par exemple en cas de tempête. Cette interruption est effectuée de façon connue en utilisant un treuil déroulant un câble d'acier permettant de déposer sur le fond une extrémité d'une portion de la conduite tubulaire flexible que l'on était en train de déposer (voir, par exemple, US-A-3 777 499).

Cette technique présente de très nombreux inconvénients. Elle nécessite la présence d'un treuil capable de soutenir la masse de la conduite tubulaire flexible comprise entre le fond et le navire poseur. Cet équipement est extrêmement encombrant et cher dès qu'on dépasse de très faibles profondeurs. De plus, aucun équipement de ce genre n'existe pour des profondeurs importantes, par exemple de l'ordre de 1000 mètres, auxquelles les conduites tubulaires flexibles n'ont pas encore été posées.

Selon la présente invention, on utilise une conduite tubulaire flexible pour effectuer l'abandon rapide, sur le fond. d'une conduite tubulaire flexible qu'on était en train de poser. Cet abandon est effectué pour interrompre le travail, par exemple en cas de tempête, pour rendre le navire poseur libre de manoeuvrer, ou en fin d'opération de pose. Après l'abandon sur le fond de la conduite tubulaire flexible dont la pose a été interrompue, on effectue la remontée de la conduite tubulaire flexible d'abandon, en vue de sa réutilisation ultérieure. Lors d'une telle procédure, des que l'extrémité supérieure de la conduite tubulaire flexible dont la pose a été abandonnée a atteint le fond, on effectue la séparation des deux conduites tubulaires flexibles.

La conduite posée ou abandonnée sur le fond présente des caractéristiques techniques différentes de la conduite tubulaire flexible de manoeuvre. Selon la présente invention, il est possible de mettre en oeuvre une conduite tubulaire flexible de manoeuvre dans diverses manoeuvres. Chaque manoeuvre commence par la connexion de la conduite tubulaire flexible de manoeuvre et finit par la récupération de la conduite tubulaire flexible de manoeuvre en vue de son utilisation ultérieurement. Contrairement à la conduite tubulaire flexible classique, la conduite tubulaire flexible de manoeuvre n'est pas une installation, mais est un outil permettant d'effectuer diverses manoeuvres :
- l'abandon d'une conduite tubulaire flexible ;
- la récupération d'une conduite tubulaire flexible abandonnée ;
- le remplissage, par exemple avec de l'eau de mer de la conduite tubulaire flexible posée ;
- la pressurisation avec un liquide, notamment de l'eau de mer pour effectuer le test final d'une conduite tubulaire flexible, avec son éventuel remplissage antérieur avec de l'eau de mer dans le cas où la conduite tubulaire flexible aurait été posée remplie avec de l'air ;
- effectuer un test de pression intermédiaire lors de la pose, la conduite tubulaire flexible posée étant remplie, notamment d'eau de mer, avec remontée de l'extrémité de la conduite tubulaire flexible posée sur un fond marin à bord du navire de pose qui a refait marche arrière ;
- pressurisation intermédiaire lorsque la conduite tubulaire flexible est posée remplie d'air. On effectue un remplissage au moins partiel de la conduite tubulaire flexible avec un liquide, notamment de l'eau de mer. On pressurise pour effectuer le test. On dépressurise. On remonte les flexibles de manoeuvre, le navire de pose reculant pour en effectuer la récupération. On vide la conduite tubulaire flexible à poser du liquide. Et pour finir, on connecte une nouvelle section de conduite tubulaire flexible pour continuer les opérations de pose.

Dans un autre mode opératoire, dès que l'extrémité supérieure de la conduite tubulaire flexible dont la pose a été accomplie atteind le fond, on peut remplir la canalisation avec un fluide, par exemple de l'eau, la conduite tubulaire flexible d'abandon étant raccordée aux équipements de surface du navire de pose.

Il est bien entendu que la pose d'une conduite tubulaire flexible remplie avec un fluide désiré, par exemple avec de l'eau douce pressurisée, ne sort pas du cadre de la présente invention.

On peut alors procéder aux essais de tenue à la pression hydrostatique. Cette procédure est mise en oeuvre lorsque la canalisation est entièrement posée et doit être vérifiée sous pression et d'autre part à titre d'essai intermédiaire en cas de réparation lorsqu'un embout supplémentaire a été monté sur la conduite tubulaire flexible à bord du navire.

L'utilisation d'une conduite tubulaire en vue du dépôt sur le fond d'une autre conduite tubulaire flexible présente de nombreux avantages. Elle permet l'utilisation du matériel existant sur le navire poseur sans avoir recours à des treuils spéciaux. On utilise par exemple un moyen tensionneur destiné à la pose de la conduite tubulaire flexible, par exemple un treuil linéaire à chenilles. De plus, la pose en vue d'abandon peut être faite à toutes les profondeurs de travail, y compris pour de grandes profondeurs de l'ordre de 1000 mètres. La profondeur d'abandon n'est limitée que par la profondeur normale de la pose de conduites tubulaires flexibles.

Dans ces conditions le dimensionnement de la conduite tubulaire flexible principale est defini afin de résister d'une part uniquement aux contraintes de son installation conditionnées notamment par son poids suspendu sans pression, et d'autre part uniquement a la pression maximale correspondant aux essais de pression hydrostatique, mais jamais à la combinaison de ces deux cas de chargement. Il en résulte une économie considérable sur le coût de fabrication de la conduite tubulaire flexible principale.

Avantageusement, on utilise pour l'abandon une conduite tubulaire flexible de faible diamètre. Par exemple, on utilise une conduite ayant, approximativement, 50 à 100mm. La conduite tubulaire flexible d'abandon doit pouvoir soutenir une conduite tubulaire principale à poser, celle-ci pouvant être de diamètre important. La conduite tubulaire flexible à poser a par exemple un diamètre interne égal à 101,6mm, 152,5mm, 228,6mm, 406,4mm ou 609,6mm, ce qui correspond respectivement à 4, 6, 9, 16 et 24 pouces. Le rapport du diamètre interne entre la conduite d'abandon et la conduite à abandonner est par exemple compris entre 2 et 12, avantageusement entre 3 et 6. Ainsi, la conduite tubulaire flexible d'abandon, selon la présente invention, comporte avantageusement des armures destinées à améliorer sa tenue en traction dont le nombre et/ou l'épaisseur ne serait pas justifié par le fait de soutenir le poids de la conduite tubulaire flexible elle-même, en combinaison avec la tenue aux essais de pression. Par exemple, on augmente l'épaisseur des armures croisées de résistance à la traction et/ou on augmente le nombre de nappe de fils, qui passe par exemple de 2 à 4.

L'utilisation de conduites tubulaires flexibles d'abandon ayant un faible diamètre diminue le coût de celles-ci ainsi que la place nécessaire à son stockage.

Avantageusement, la connexion hydraulique des conduites tubulaires flexibles est séparée de la liaison mécanique entre la conduite tubulaire flexible à poser et la conduite tubulaire flexible d'abandon selon la présente invention. On facilite ainsi la séparation de deux conduites tubulaires flexibles. Toutefois, notamment dans les cas où l'on ne désire pas séparer les deux conduites sur le fond, notamment dans les cas de tests intermédiaires, il est possible de réaliser une connexion directe des deux conduites utilisant par exemple des embouts et/ou des brides. Dans un tel cas, la même connexion assure la liaison mécanique et hydraulique des deux conduites tubulaires flexibles.

L'invention a principalement pour objet un procédé selon la revendication 1.

L'invention sera mieux comprise au moyen de la description ci-après et des figures annexées données comme des exemples non limitatifs parmi lesquels :
- La figure 1 est une vue en perspective éclatée d'une conduite tubulaire flexible de type connu;
- La figure 2 comporte une vue en perspective éclatée de conduites tubulaires flexibles d'abandon utilisées dans le procédé selon la présente invention;
- La figure 3 est un schéma illustrant la mise en oeuvre du procédé selon la présente invention;
- La figure 4 est un schéma de principe du dispositif de liaison entre deux conduites tubulaires flexibles;
- La figure 5 est un schéma illustrant le principe du procédé d'abandon selon la présente invention;
- La figure 6 est un schéma illustrant le principe du procédé de tests selon la présente invention;
- La figure 7 est un schéma illustrant la liaison entre deux conduites tubulaires flexibles mises en oeuvre dans une procédure de tests;
- La figure 8 est un schéma illustrant le procédé de recupération d'une conduite tubulaire flexible selon la présente invention.

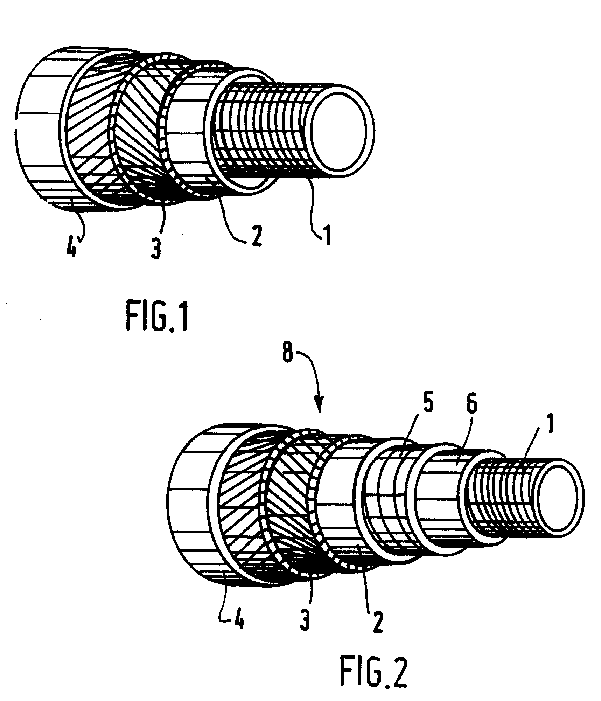

Sur les figures 1 à 8 on a utilisé les mêmes références pour désigner les mêmes éléments.

Sur la figure 1, on peut voir un exemple de conduite tubulaire flexible de type connu. Elle comporte une carcasse interne métallique 1, entourée par une gaine plastique 2, par des armures croisées 3, par une bande adhésive, non représentée, et par une gaine plastique 4.

La conduite tubulaire flexible de la figure 1 peut par exemple être utilisée pour véhiculer de l'eau, du gaz ou du pétrole, par exemple posée sur un fond marin. Ce type de conduite n'a jamais été posé en mer profonde, par exemple à une profondeur de 1000 mètres. Toutefois, si la demanderesse devait réaliser une telle conduite, le diamètre interne étant de 76,2 mm (3 pouces), la conduite devant pouvoir résister à une pression interne maximale de service de l'ordre de 280 bars et être posée à une profondeur de 1000 m, la conduite tubulaire flexible aurait une structure sensiblement analogue à celle illustrée sur la figure 1.

La carcasse interne aurait une épaisseur de 5 mm, la voûte aurait une épaisseur de 5 mm, la bande adhésive aurait une épaiseur de 0,5 mm et la gaine plastique 4 aurait une épaisseur de 4,5 mm. Une telle conduite tubulaire flexible aurait une résistance à la traction en ligne droite, selon les règles admises couramment pour caractériser la résistance axiale d'une conduite flexible, de l'ordre de 180 tonnes. Par comparaison, la conduite tubulaire flexible de manoeuvre illustrée sur la figure 2 d'un même diamètre interne a une résistance à la traction en ligne droite de l'ordre de 460 tonnes, lorsqu'elle est réalisée de façon à pouvoir être utilisée comme conduite tubulaire flexible de manoeuvre pour effectuer les diverses opérations relatives à la pose, par une profondeur d'eau de 1000 mètres, d'une conduite tubulaire flexible présentant un diamètre interne de 305 mm (12 pouces) et devant résister a une pression interne de service de 180 bars. On notera que la pression maximale de service prévue pour la conduite flexible de manoeuvre de diamètre 76,2 mm, égale à 280 bars, correspond à la pression de test de la conduite flexible à poser qui est fixée, ainsi qu'il est usuel, à 1,5 fois la pression de service maximale.

En utilisant la conduite tubulaire de manoeuvre, on réduit le coût linéaire de la conduite tubulaire flexible à poser qui devient plus légère. Dans le cas où la conduite tubulaire felxible à poser présente par exemple un diamètre interne de 305 mm (12 pouces) et doit résister à une pression interne de 180 bars, il a ainsi été trouvé que le procédé selon l'invention permet de poser dans une profondeur d'eau de 1000 mètre une telle conduite flexible dont le poids pourrait être limité à environ 208 kg/m, la structure de la conduite flexible devant présenter une résistance mécanique conditionnée d'une part par la pression maximale de service de 180 bars, et d'autre part par le poids de conduite suspendue correspondant à la profondeur d'eau de 1000 mètres, mais pas à la combinaison de ces deux conditions de chargement en pression et en traction. Une telle structure peut facilement être réalisée avec les moyens de fabrications actuellement disponibles. Par comparaison, la profondeur d'eau la plus importante dans laquelle peut être posée la même conduite tubulaire flexible de diamètre interne 305 mm et de pression de service 180 bars, telle que décrite ci-dessus, est réduite d'environ moitié lorsque la dite conduite flexible de 305 mm est posée selon les procédés actuellement connus, c'est-à-dire lorsqu'elle est soumis à l'action combinée de la charge axiale déterminée par le poids de la conduite suspendue dans une profondeur d'eau correspondant à la profondeur de pose, et de la pression interne maximale, qui est, en général, la pression de test, égale par exemple à 1,5 fois la pression de service maximale. De plus, pour certaines combinaisons de diamètre interne et de tenue aux pressions, la conduite principale destinée à véhiculer les fluides ne serait pas réalisable avec les technologies actuelles. En effet, une telle conduite ne serait pas capable de résister simultanément à son poids apparent dans l'eau, suspendue entre le navire de pose et le fond et à la pression nominale des tests en pression.

Sur la figure 2, on peut voir un exemple de réalisation de conduite tubulaire flexible 8. La conduite tubulaire 8 de la figure 2a a un diamètre interne sensiblement égal à 3 pouces. Ce type de conduite permet de véhiculer un fluide, par exemple en vue de tests de tenue à la pression d'une conduite tubulaire flexible posée.

La conduite tubulaire flexible 8 de la figure 2 comporte une carcasse interne métallique 1, une gaine plastique 6, une voûte pour résister à la pression 5, une gaine plastique 2, un ensemble d'armures 3, une gaine plastique externe 4. Pour une utilisation à 1000 mètres de profondeur avec une pression interne maximale de service de l'ordre de 280 bars (4000 psi selon les mesures anglo-saxonnes), la carcasse interne aura une épaisseur sensiblement égale à 7,2 mm, la gaine plastique 6 4,5 mm, la voûte de pression 5 6,2 mm; l'ensemble d'armures 3 comportant par exemple une première paire de nappes d'armures ayant une épaisseur totale de 6 mm, couverte par une bande adhésive ayant une épaisseur de 1, 5 mm, et une deuxième paire de nappes d'armures ayant une épaisseur de 7,2 mm. Des bandes adhésives d'une épaisseur de 0,75 mm relient les armures externes à la gaine plastique 4 ayant 4,5 mm d'épaisseur. La structure des armures ainsi que les bandes adhésives n'ont pas été représentées sur la figure 2. Pour résister aux efforts de traction on peut par exemple doubler le nombre d'armures croisées représentées sur la figure 2 ou augmenter l'épaisseur des armures croisées.

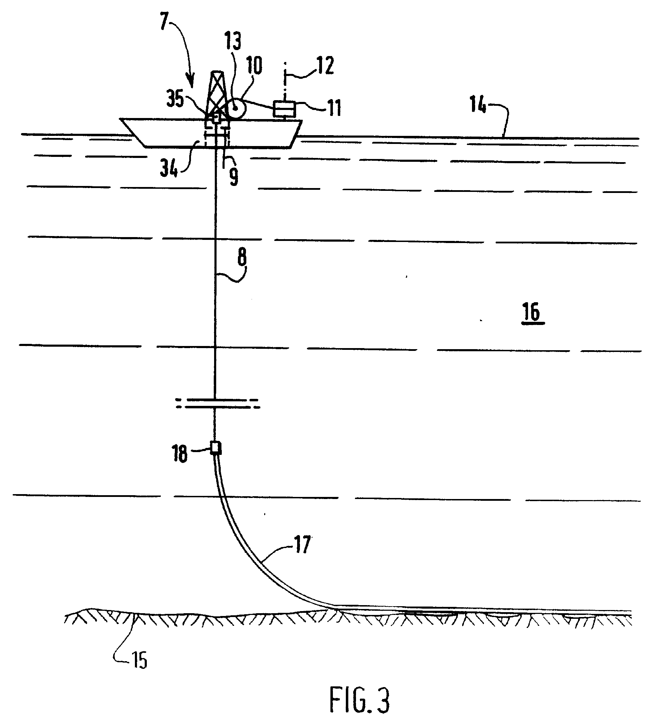

Sur la figure 3, on peut voir un navire 7 effectuant la descente en vue d'abandon ou de tests d'une conduite tubulaire flexible 17. La mer porte la référence 16, la surface de l'eau la référence 14 et le fond la référence 15.

En partant du fond 15 on trouve la conduite tubulaire 17 à poser ou à abandonner, un dispositif de solidarisation 18 avec la conduite tubulaire flexible de manoeuvre 8 des moyens tensionneurs 35. une roue de renvoi 10 d'axe horizontal 13, un panier de stockage 11 d'axe vertical 12.

Avantageusement, on utilise comme moyen tensionneur 35 un treuil qui permet de mettre une charge en mouvement par application d'un effort à la conduite tubulaire.

Avantageusement, le treuil est du type linéaire. c'est-à-dire que la portion de conduite sur laquelle le treuil exerce son action est rectiligne. En d'autres termes, dans un treuil linéaire, la conduite n'est soumise à aucune flexion entre l'amont du treuil, où la conduite entre dans le treuil avec une première tension mécanique et l'aval du treuil, où la conduite quitte le treuil, et où la tension axiale dans la conduite est supérieure à la tension mécanique à son entrée.

Les moyens tensionneurs 35 utilisent par exemple une pluralité de chenilles. Il est avantageux d'utiliser des moyens tensionneurs 35 disposés verticalement en aval de la roue de renvoi 10 et du panier de stockage 11 qui dans ce cas n'ont pas à subir la tension mécanique due au poids de la conduite tubulaire de manoeuvre 8 et de la conduite tubulaire flexible à poser 17. Dans un exemple particulièrement avantageux illustré sur la figure 3, la pose ou l'abandon est effectué à travers une ouverture 34 pratiquée à l'intérieur du navire et communiquant avec la mer 16. Une telle ouverture 34 est appelée moon pool en terminologie anglo-saxonne. Avantageusement, une table de travail 9 est disposée à l'intérieur du moon pool 34 en aval des moyens tensionneurs 35 permettant la manipulation ou la manutention de conduites tubulaires flexibles 8 et/ou 17.

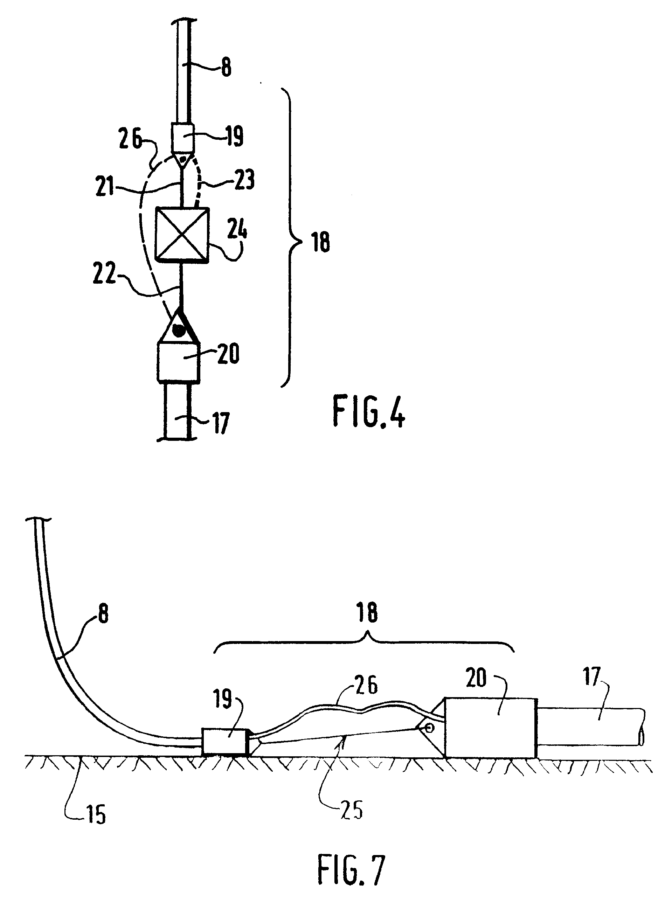

Sur la figure 4, on peut voir un exemple de dispositif de solidarisation 18 entre une conduite tubulaire 8 et une conduite tubulaire flexible 17 à poser. Le dispositif de solidarisation 18 comprend un embout 19 monté à l'extrémité de la conduite tubulaire 8, une liaison mécanique 21, un dispositif de déconnexion 24, une liaison mécanique 22 et un embout 20 monté à l'extrémité de la conduite tubulaire flexible 17. De plus, dans le cas où l'on veut pouvoir effectuer la déconnexion, le dispositif 18 comporte en outre avantageusement une liaison 23 fournissant un signal de commande au dispositif de déconnexion 24. La liaison 23 est par exemple une liaison hydraulique. La réalisation d'une connexion hydraulique optionnelle 26 des conduites tubulaires flexibles 6 et 17, ne sort pas du cadre de la présente invention.

Il est possible, une fois les opérations de pose terminées, d'effectuer de façon optionnelle le test de tenue en pression hydrostatique.

Le dispositif de déconnexion 24 comporte par exemple une pince comportant un bras de levier important. Par exemple, un véhicule sous-marin commandé effectue la coupure d'une ligne de fermeture, par exemple du type câble, le faible diamètre empêchant l'écart de deux bras de leviers et par suite des mâchoires de la pince.

Dans une variante de réalisation, la fermeture est assurée par un dispositif électromagnétique, par exemple du type électro-aimant, ou hydraulique, par exemple de type vérin.

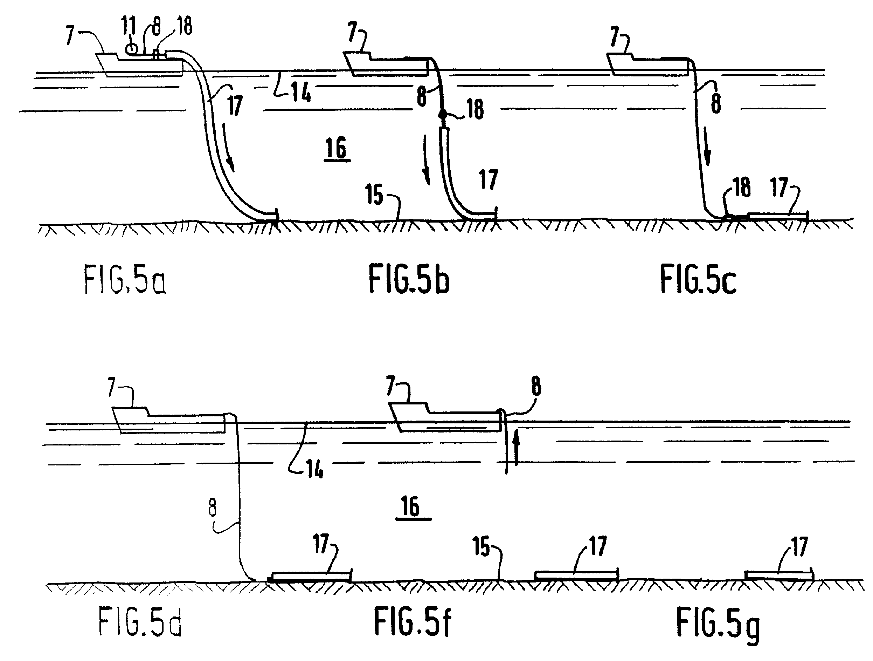

Sur la figure 5, on a illustré schématiquement les opérations d'abandon de la conduite tubulaire flexible 17 que l'on est en train de poser sur la figure 5a. On effectue la connexion par l'intermédiaire du dispositif de solidarisation 18 de la conduite tubulaire flexible 8 à l'extrémité de la conduite tubulaire flexible 17.

Comme illustré sur la figure 5b, l'ensemble conduite tubulaire flexible 8 et conduite tubulaire flexible 17 est descendu jusqu'à ce que, comme illustré sur la figure 5c, la conduite tubulaire 17 repose entièrement sur le fond 15. A ce moment là, comme illustré sur la figure 5d, on effectue la déconnexion entre les conduites tubulaires flexibles 8 et 17. Pour cela, on actionne le dispositif de déconnexion 24 du dispositif 18. Cette déconnexion peut être, soit réversible, soit irréversible selon le traitement futur désiré et selon l'urgence de l'intervention. La conduite tubulaire flexible 8 est remontée sur le navire 7, comme ilustré sur la figure 5f. A partir de ce moment là, le navire 7 peut se mettre à l'abri dans un port, ou peut aller intervenir sur un autre chantier plus urgent, la conduite tubulaire flexible 17 reposant sur le fond, comme illustré sur la figure 5g.

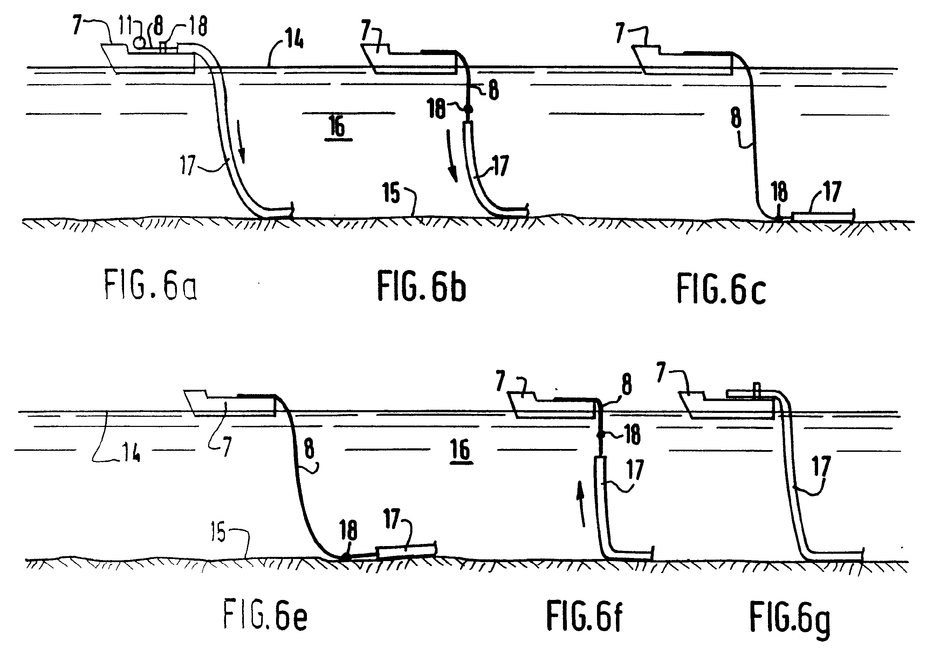

Vu le risque de pollution que peut représenter la fuite par exemple d'un pipeline, on est amené à exiger une fiabilité absolue des conduites tubulaires flexibles. On procède donc, par exemple, suite à une réparation de ligne et/ou du montage d'un embout supplémentaire, et/ou en fin d'opération de pose, aux tests, notamment au test de tenue à la pression interne de la conduite tubulaire flexible 17. Cette procédure est illustrée sur la figure 6.

Sur la figure 6a on fixe à l'extrémité de la conduite tubulaire flexible 17 à tester, par l'intermédiaire d'un dispositif 18, une conduite tubulaire flexible 8, avantageusement de faible diamètre.

Sur la figure 6b on a illustré la descente des conduites tubulaires flexibles 8 et 17. Ce n'est que quand la conduite tubulaire flexible 17 repose entièrement sur le fond, comme illustré sur la figure 6c, que l'on peut effectuer la mise en pression et le test, si nécessaire après remplissage de la conduite tubulaire flexible. Ainsi, on peut tester la conduite tubulaire 17 qui subit uniquement les contraintes dues à la pression qu'elle doit pouvoir supporter et non pas les contraintes dues à la tension induite par son poids, la conduite étant déroulée à la verticale.

Comme illustré sur la figure 6e, on assure la dépressurisation des conduites tubulaires 8 et 17. On peut remonter, comme illustré sur la figure 6f, les conduites tubulaires S et 17 à bord du navire 7. Dès que l'extrémité de la conduite tubulaire 17 a atteint le navire, on peut poursuivre les opérations désirées. Par exemple, si la conduite tubulaire 17 a passé avec succès le test, on raccorde un nouveau tronçon de conduite tubulaire 17 et on poursuit les opérations de pose.

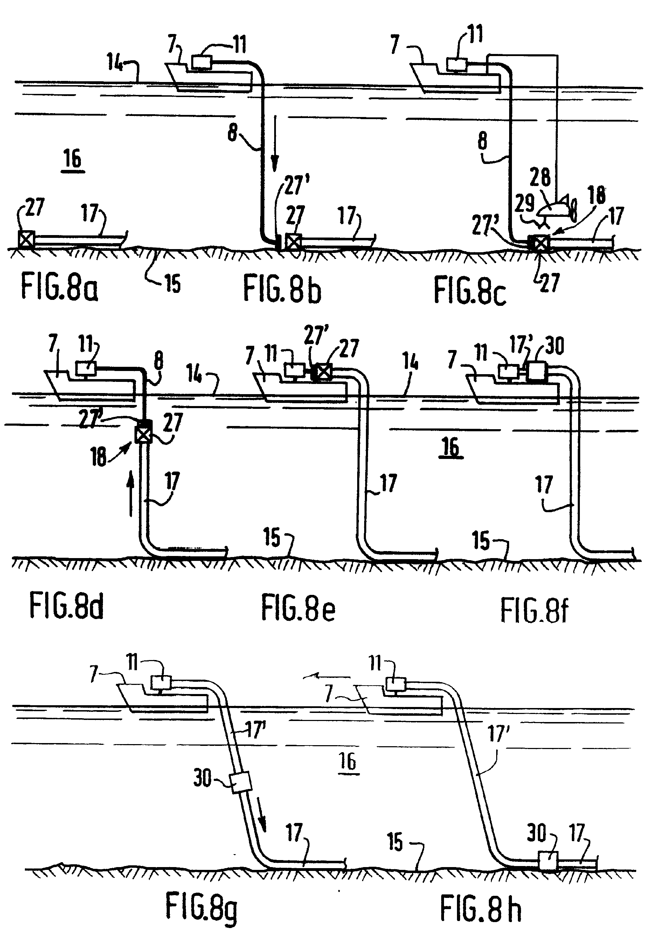

La procédure de test n'est pas nécessairement suivie par une étape de déconnexion au fond des conduites tubulaires 8 et 17. Ainsi, une variante de réalisation du dispositif de solidarisation 18 pour le test est illustrée sur la figure 7. Une liaison mécanique, sans possibilité de séparation, assure la jonction des conduites tubulaires flexibles 8 et 17. La liaison mécanique est par exemple assurée par un câble 25 de fort diamètre. Une liaison hydraulique 26 est obligatoire pour pouvoir effectuer la mise en pression de la conduite tubulaire 17.

La liaison hydraulique 26 est avantageusement de longueur nettement supérieure à la longueur de la liaison mécanique 25. On limite ainsi le risque de rupture de la liaison hydraulique.

Sur la figure 8, on a illustré la procédure de reprise de pose. Sur la figure 8a on trouve l'extrémité d'une conduite tubulaire flexible 17 abandonnée sur le fond. Cette situation correspondant par exemple au cas de la figure 5g. En vue de la reprise de la pose, l'extrémité de la conduite flexible 17 est avantageusement munie d'un ensemble 27 de connexion complété éventuellement par des moyens facilitant son repérage par un sonar. Un tel ensemble 27 comprend par exemple une partie du raccord 24 abandonné avec la conduite tubulaire flexible relié par une liaison mécanique 22, avantageusement une liaison mécanique souple à un embout 20 monté à l'extrémité de la conduite tubulaire flexible 17. Dans une variante de réalisation, la conduite tubulaire flexible 8 est munie d'un dispositif de connexion 27′. Il comprend par exemple un embout et le dispositif d'adaptation de diamètre d'embout permettant une connexion entre le dispositif 27 et 27′ en vue de former un dispositif de solidarisation 18 des deux conduites tubulaires flexibles. La balise sonar active émet des ondes acoustiques. La balise sonar passive, en réfléchissant les ondes acoustiques émises par un sonar, par exemple à partir d'un navire ou d'un véhicule sous-marin téléguidé (ROV) 28 facilite la localisation de l'extrémité de la conduite tubulaire flexible. Le navire poseur 7 descend une conduite tubulaire flexible 8 comme illustré sur la figure 8b. La conduite tubulaire flexible 8 est connectée, comme illustré sur la figure 8c, par exemple par l'intermédiaire des dispositifs 27 et 27′ à la conduite tubulaire flexible 17. Cette connexion est effectuée, soit par télécommande, soit à l'aide d'un bras manipulateur 29 du véhicule sous-marin téléguidé 28.

Sur la figure 8d on a illustré la remontée des conduites tubulaires flexibles 8 et 17.

Une fois l'extrémité de la conduite tubulaire 17 à bord du navire 7, comme illustré sur la figure 8e, on effectue la déconnexion des conduites tubulaires 8 et 17.

Comme illustré sur la figure 8f, on effectue la connexion de l'extrémité 30 de la conduite tubulaire 17 avec une extrémité d'un tronçon supplémentaire de conduite tubulaire 17′ à poser.

A partir de ce moment là, on poursuit les opérations habituelles de pose de conduites tubulaires flexibles. Comme illustré sur la figure 8g, les conduites tubulaires 17 et 17′ sont posées sur le fond. Sur la figure 8h on peut voir la pose de la conduite tubulaire 17′, une connexion 30 entre les conduites 17′ et 17 étant déjà posée sur le fond. Le navire poseur 7 continue son avance, comme illustré sur la figure 8h, jusqu'à l'obtention de la pose complète de conduites tubulaires flexibles désirées.

L'invention s'applique notamment aux opérations de manoeuvre de conduites flexibles sur le fond marin.

L'invention s'applique principalement à la pose de conduites tubulaires flexibles pour la réalisation de pipelines de transport d'hydrocarbures en mer profonde sur le fond dont la profondeur avoisine les mille mètres.

## Revendications

1. Procédé de manipulation de conduites tubulaires flexibles dans une tranche d'eau au-dessus d'un fond sous marin (15) à partir d'un support flottant (7), dans lequel on met en oeuvre une conduite tubulaire flexible de manoeuvre (8) récupérable, de caractéristiques différentes de celles de la conduite tubulaire flexible à manipuler (17), ladite conduite tubulaire flexible de manoeuvre (8) présentant une résistance mécanique suffisante pour résister d'une part à l'action combinée de la pression interne la plus élevée à laquelle doit résister la conduite tubulaire flexible à manipuler (17) et de l'effort de traction axiale correspondant au poids apparent dans l'eau de la longueur de conduite tubulaire flexible de manoeuvre (8) qui se trouve suspendue entre le support flottant et le fond, et, d'autre part, à l'action isolée de l'effort de traction axiale correspondant au poids apparent dans l'eau de la longueur de conduite tubulaire flexible à manipuler (17) lorsque cette dernière est suspendue entre le support flottant et le fond par l'intermédiaire de la conduite flexible de manoeuvre (8), et ledit procédé comportant les étapes successives consistant à :
a) connecter par des moyens de solidarisation mécaniques (18) une extrémité de la conduite tubulaire flexible de manoeuvre (8) à une extrémité libre et accessible de la conduite tubulaire flexible à manipuler (17),
b) assurer, par des moyens tensionneurs (35) installés sur le support flottant de pose, le déplacement longitudinal de la conduite tubulaire flexible de manoeuvre (8), de façon à ce que l'extrémité libre de la conduite tubulaire flexible à manipuler (17) connectée à la conduite tubulaire flexible de manoeuvre (8) franchisse verticalement la hauteur de la tranche d'eau, le poids de la conduite tubulaire flexible à manipuler (17) restant supporté par la conduite tubulaire flexible de manoeuvre (8),
c) déconnecter la conduite tubulaire flexible de manoeuvre (8) de l'extrémité libre de la conduite tubulaire flexible à manipuler (17),
d) récupérer la conduite flexible de manoeuvre (8) pour une utilisation ultérieure,

2. Procédé selon la revendication 1, caractérisé par le fait que l'on utilise les mêmes moyens tensionneurs (35) pour assurer la manoeuvre et la reprise des efforts de traction d'une part de la conduite tubulaire flexible à manipuler (17), et, d'autre part, de la conduite tubulaire flexible de manoeuvre (8), lesdits moyens tensionneurs étant du type treuil linéaire.

3. Procédé selon la revendication 1 ou 2, pour l'abandon d'une conduite tubulaire flexible sur le fond sous-marin, caractérisé par le fait que l'étape (a) est précédée d'une étape préliminaire consistant à arrêter la progression du support flottant de pose, que l'étape (a) consiste à réaliser à bord du support flottant la connexion de la conduite tubulaire flexible de manoeuvre (8) et de la conduite tubulaire flexible à abandonner (17), que l'étape (b) consiste à dérouler la conduite flexible de manoeuvre (8) de façon à descendre sur le fond depuis le support flottant de pose l'extrémité libre de la conduite tubulaire flexible à abandonner (17) suspendue à la conduite flexible de manoeuvre (8), que l'étape (c) de déconnexion est réalisée sur le fond, et que l'étape (d) est précédée du relevage à bord du support flottant de la conduite tubulaire flexible de manoeuvre (8).

4. Procédé selon la revendication 1 ou 2 pour la récupération d'une conduite tubulaire flexible (17) reposant sur le fond sous-marin, caractérisé par le fait que l'étape (a) est précédée d'une étape préliminaire consistant à descendre au niveau du fond l'extrémité à connecter de la conduite tubulaire flexible de manoeuvre (8), que l'étape (a) consiste à connecter au niveau du fond ladite extrémité de la conduite flexible (8) avec l'extrémité libre de la conduite tubulaire flexible à récupérer (17), que l'étape (b) consiste à remonter à bord du support flottant de pose l'extrémité libre de la conduite tubulaire flexible à récupérer (17), la conduite tubulaire flexible à récupérer (17) restant suspendue à la conduite tubulaire flexible de manoeuvre (8) pendant que la conduite tubulaire flexible de manoeuvre (8) est retenue et remontée par les moyens tensionneurs (35) et que l'étape (c) est réalisée à bord du support flottant.

5. Procédé selon la revendication 1 ou 2, caractérisé par le fait que lors de la connexion entre la conduite tubulaire flexible à manipuler (17) et la conduite tubulaire flexible de manoeuvre (8) on met en place une liaison hydraulique (26) reliant les conduits internes des deux conduites.

6. Procédé selon la revendication 5 pour la pose avec test de résistance à la pression interne d'une conduite tubulaire flexible, caractérisé par le fait que l'étape (a) est précédée d'étapes préliminaires consistant d'abord à dérouler et poser partiellement sur le fond la conduite tubulaire flexible (17) à poser, ladite conduite tubulaire flexible à poser (17) étant posée pleine de liquide, notamment de l'eau, puis à arrêter la progression du support flottant de pose et le déroulement de ladite conduite tubulaire flexible à poser (17), son extrémité libre restant accessible à bord du support flottant, que l'étape (a) consiste à effectuer la connexion de la conduite tubulaire flexible (17) à la conduite tubulaire flexible de manoeuvre (8) à bord du support flottant, que l'étape (b) consiste à dérouler et descendre la conduite tubulaire flexible de manoeuvre (8) jusqu'à ce que l'extrémité libre de la conduite tubulaire flexible à poser (17) repose sur le fond et qu'elle est suivie, de deux étapes intermédiaires consistant d'abord à pressuriser à une pression déterminée pour le test le liquide contenu dans les conduites tubulaires flexibles à poser (17) et de manoeuvre (8), cette dernière ayant été préalablement remplie de liquide, puis à poursuivre le test de résistance à la pression pendant une durée déterminée de façon à vérifier l'intégrité et la conformité de la conduite tubulaire flexible à poser (17), que l'étape (c) consiste à séparer les deux conduites tubulaires flexibles (17) et (8) au fond, et que l'étape (d) est précédée du relevage à bord du support flottant de la conduite tubulaire flexible de manoeuvre (8).

7. Procédé selon la revendication 5 pour la pose avec test de résistance à la pression interne d'une conduite tubulaire flexible, caractérisé par le fait que l'étape (a) est précédée d'étapes préliminaires consistant d'abord à dérouler et poser partiellement sur le fond la conduite tubulaire flexible à poser (17), ladite conduite tubulaire flexible à poser (17) étant posée pleine de liquide, puis à arrêter la progression du support flottant et le déroulement de ladite conduite tubulaire flexible à poser (17), son extrémité libre restant accessible à bord du support flottant, que l'étape (a) consiste à effectuer la connexion de la conduite tubulaire flexible à poser (17) et de la conduite tubulaire flexible de manoeuvre (8) à bord du support flottant, que l'étape (b) consiste à dérouler et descendre la conduite flexible de manoeuvre (8) jusqu'à ce que l'extrémité libre de la conduite tubulaire flexible à poser (17) repose sur le fond et qu'elle est suivie de deux étapes intermédiaires consistant d'abord à pressuriser à une pression déterminée pour le test le liquide contenu dans les conduites tubulaires flexibles à poser (17) et de manoeuvre (8), cette dernière ayant été préalablement remplie de liquide, puis à poursuivre le test de résistance à la pression pendant une durée déterminée de façon à vérifier l'intégrité et la conformité de la conduite tubulaire flexible à poser (17), que l'étape (c) est précédée d'étapes intermédiaires qui consistent d'abord à dépressuriser les conduites tubulaires flexibles (17) et (8), puis à relever la conduite tubulaire flexible de manoeuvre (8) à l'aide des moyens tensionneurs (35), la conduite tubulaire flexible à poser (17) restant suspendue à la conduite tubulaire flexible de manoeuvre (8), et que cette étape (c) consiste à déconnecter les deux conduites tubulaires flexibles (17) et (8) à bord du support flottant.

8. Procédé selon la revendication 1 pour la pose d'une conduite tubulaire flexible sur le fond sous-marin, caractérisé par le fait que la conduite tubulaire flexible à poser (17) est déroulée et posée sans être remplie de liquide, restant ainsi pleine d'air et que, préalablement à la réalisation de l'étape (c), on procéde à une étape préliminaire consistant à remplir de liquide la conduite tubulaire flexible à poser (17) ainsi que la conduite tubulaire flexible de manoeuvre (8).

9. Procédé selon la revendication 8, caractérisé par le fait que l'étape préliminaire de remplissage des deux conduites tubulaires flexibles (17) et (8) est effectuée préalablement à l'étape (b).

10. Procédé selon la revendication 5 pour la pose avec test de résistance à la pression interne d'une conduite tubulaire flexible, la conduite tubulaire flexible à poser (17) étant déroulée et posée pleine d'air, caractérisé par le fait que, préalablement à la réalisation d'un test de résistance à la pression interne, ladite conduite tubulaire flexible à poser (17) est remplie de liquide selon la revendication 8 ou 9, que l'étape (a) est précédée d'étapes préliminaires consistant d'abord à dérouler et poser partiellement sur le fond la conduite tubulaire flexible à poser (17) puis à arrêter la progression du support flottant et le déroulement de ladite conduite tubulaire flexible à poser (17), son extrémité libre restant accessible à bord du support flottant, que l'étape (a) consiste à effectuer la connexion des conduites flexibles à poser (17) et de manoeuvre (8) à bord du support flottant, que l'étape (b) consiste à dérouler et descendre la conduite flexible de manoeuvre (8) jusqu'à ce que l'extrémité libre de la conduite tubulaire flexible à poser (17) repose sur le fond et qu'elle est suivie de deux étapes intermédiaires consistant d'abord à pressuriser à une pression déterminée pour le test le liquide contenu dans la conduite tubulaire flexible à poser (17) ainsi que dans la conduite tubulaire flexible de manoeuvre (8), cette dernière ayant été préalablement remplie de liquide, puis à poursuivre le test de résistance à la pression pendant une durée déterminée de façon à vérifier l'intégrité et la conformité de la conduite tubulaire flexible à poser (17), que l'étape (c) consiste à séparer les deux conduites tubulaires flexibles (17) et (8) au fond, et que l'étape (d) est précédée du relevage à bord du support flottant de la conduite tubulaire flexible de manoeuvre (8).

11. Procédé de pose avec test de résistance à la pression interne d'une conduite tubulaire flexible selon la revendication 5, la conduite tubulaire flexible à poser (17) étant déroulée et posée pleine d'air, caractérisé par le fait que, préalablement à la réalisation d'un test de résistance à la pression, ladite conduite tubulaire flexible à poser (17) est remplie de liquide selon la revendication 8 ou 9, que l'étape (a) est précédée d'étapes préliminaires consistant d'abord à dérouler et poser partiellement sur le fond la conduite tubulaire flexible à poser (17) puis à arrêter la progression du support flottant et le déroulement de la conduite tubulaire flexible à poser (17), son extrémité libre restant accessible à bord du support flottant, que l'étape (a) consiste à effectuer la connexion des conduites tubulaires flexibles à poser (17) et de manoeuvre (8) à bord du support flottant, que l'étape (b) consiste à dérouler et descendre la conduite flexible de manoeuvre (8) jusqu'à ce que l'extrémité libre de la conduite tubulaire flexible à poser (17) repose sur le fond et qu'elle est suivie de deux étapes intermédiaires consistant d'abord à pressuriser à une pression déterminée pour le test le liquide contenu dans les conduites tubulaires flexibles à poser (17) et de manoeuvre (8), cette dernière ayant été préalablement remplie de liquide, puis à poursuivre le test de résistance à la pression pendant une durée déterminée de façon à vérifier l'intégrité et la conformité de la conduite tubulaire flexible à poser (17), que l'étape (c) est précédée d'étapes intermédiaires qui consistent d'abord à depressuriser les conduites tubulaires flexibles (17) et (8), puis à relever la conduite flexible de manoeuvre (8) à l'aide des moyens tensionneurs (35), la conduite tubulaire flexible à poser (17) restant suspendue à la conduite flexible de manoeuvre (8), et que cette étape (c) est réalisée à bord du support flottant.

12. Procédé selon l'une quelconque des revendications 1 à 11, caractérisé par le fait que le rapport du diamètre interne de la conduite tubulaire flexible à manipuler (17) et de la conduite tubulaire flexible de manoeuvre (8) est compris entre 2 et 12, de préférence entre 3 et 8.

## Patentansprüche

1. Verfahren zum Handhaben flexibler Rohrleitungen in einem Stück Wasser über dem Meeresboden (15) ausgehend von einem schwimmenden Träger (7), bei dem eine wiederverwendbare flexible Bedienungsrohrleitung (8) mit Eigenschaften verschieden von denen der zu handhabenden flexiblen Rohrleitung (17) angebracht wird, wobei die flexible Bedienungsrohrleitung (8) eine mechanische Widerstandsfähigkeit aufweist, die dazu ausreicht, einerseits der kombinierten Wirkung aus einem Innendruck, der höher als derjenige ist, dem die zu handhabende flexible Rohrleitung (17) standhalten muß, und der axialen Zugkraft entsprechend dem scheinbaren Gewicht im Wasser des Stücks flexibler Bedienungsrohrleitung (8), das zwischen dem schwimmenden Träger und dem Boden aufgehängt ist, und andererseits der Einzelwirkung der axialen Zugkraft entsprechend dem scheinbaren Gewicht im Wasser des Stücks der zu handhabenden flexiblen Rohrleitung (17), wenn diese letztere über die flexible Bedienungsleitung (18) zwischen dem schwimmenden Träger und dem Boden aufgehängt ist, standzuhalten wobei dieses Verfahren die folgenden aufeinanderfolgenden Schritte aufweist:
a) Verbinden eines Endes der flexiblen Bedienungsrohrleitung (8) über eine mechanische Verbindungseinrichtung (18) mit einem freien und zugänglichen Ende der zu handhabenden flexiblen Rohrleitung (17);
b) Sorgen, durch auf dem schwimmenden Verlegungsträger angebrachte Zugausübungseinrichtungen (35), für eine Längsverschiebung der flexiblen Bedienungsrohrleitung (8) so, daß das freie Ende der zu handhabenden flexiblen Rohrleitung (17), das mit der flexiblen Bedienungsrohrleitung (8) verbunden ist, die Höhe des Stücks Wasser vertikal durchquert, wobei das Gewicht der zu handhabenden flexiblen Rohrleitung (17) von der flexiblen Bedienungsrohrleitung (8) abgestützt bleibt;
c) Abtrennen der flexiblen Bedienungsrohrleitung (8) vom freien Ende der zu handhabenden flexiblen Rohrleitung (17);
d) Wiedergewinnen der flexiblen Bedienungsleitung (8) für eine weitere Verwendung.

2. Verfahren nach Anspruch 1, **dadurch gekennzeichnet**, daß dieselben Zugausübungseinrichtungen (35) dazu verwendet werden, die Bedienung und das Auffangen der Zugkräfte einerseits der zu handhabenden flexiblen Rohrleitung (17) und andererseits der flexiblen Bedienungsrohrleitung (8) zu sorgen, wobei diese Zugausübungseinrichtungen von der Art einer linearen Winde sind.

3. Verfahren nach einem der Ansprüche 1 oder 2 zum Zurücklassen einer flexiblen Rohrleitung auf dem Meeresboden, **dadurch gekennzeichnet**, daß dem Schritt (a) ein Vorbereitungsschritt vorangeht, bei dem die Weiterbewegung des schwimmenden Verlegungsträgers angehalten wird; daß der Schritt (a) darin besteht, daß an Bord des schwimmenden Trägers die Verbindung zwischen der flexiblen Bedienungsrohrleitung (8) und der zurückzulassenden flexiblen Rohrleitung (17) hergestellt wird; daß der Schritt (b) darin besteht, daß die flexible Bedienungsleitung (8) abgerollt wird, damit sie vom schwimmenden Verlegungsträger zum Boden absinkt, wobei das freie Ende der zurückzulassenden flexiblen Rohrleitung (17) an der flexiblen Bedienungsleitung (8) angehängt ist; daß der Schritt (c) des Abtrennens auf dem Boden ausgeführt wird und daß dem Schritt (d) das Zurückziehen der flexiblen Bedienungsrohrleitung (8) an Bord des schwimmenden Trägers vorangeht.

4. Verfahren nach einem der Ansprüche 1 oder 2 zum Rückgewinnen einer flexiblen Rohrleitung (17), die auf dem Meeresboden ruht, **dadurch gekennzeichnet**, daß dem Schrit (a) ein Vorbereitungsschritt vorangeht, der darin besteht, das anzuschließende Ende der flexiblen Bedienungsrohrleitung (8) auf den Boden abzusenken; daß der Schritt (a) darin besteht, das genannte Ende der flexiblen Leitung (8) auf dem Boden mit dem freien Ende der rückzugewinnenden flexiblen Rohrleitung (17); daß der Schritt (b) darin besteht, das freie Ende der rückzugewinnenden flexiblen Rohrleitung (17) an Bord des schwimmenden Trägers zurückzuziehen, wobei die rückzugewinnende flexible Rohrleitung (17) an der flexiblen Bedienungsrohrleitung (8) aufgehängt bleibt, während die flexible Bedienungsrohrleitung (8) durch die Zugausübungseinrichtungen (35) zurückgehalten und hochgezogen wird; und daß der Schritt (c) an Bord des schwimmenden Trägers ausgeführt wird.

5. Verfahren nach einem der Ansprüche 1 oder 2, **dadurch gekennzeichnet**, daß beim Herstellen der Verbindung zwischen der zu handhabenden flexiblen Rohrleitung (17) und der flexiblen Bedienungsrohrleitung (8) eine hydraulische Verbindung (26) hergestellt wird, die die Innenleitungen der zwei Leitungen miteinander verbindet.

6. Verfahren nach Anspruch 5 zum Verlegen einer flexiblen Rohrleitung mit einer Überprüfung der Innendruckfestigkeit, **dadurch gekennzeichnet**, daß dem Schritt (a) Vorbereitungsschritte vorangehen, die daraus bestehen, zunächst die zu verlegende flexible Rohrleitung (17) abzurollen und teilweise auf dem Boden zu verlegen, wobei die genannte zu verlegende flexible Rohrleitung (17) gefüllt mit Flüssigkeit, insbesondere Wasser, verlegt wird, und dann die Weiterbewegung des schwimmenden Verlegeträgers und das Abrollen der genannten zu verlegenden flexiblen Rohrleitung (17) angehalten werden, wobei ihr freies Ende an Bord des flexiblen Trägers zugänglich bleibt; daß der Schritt (a) darin besteht, eine Verbindung zwischen der flexiblen Rohrleitung (17) und der flexiblen Bedienungsrohrleitung (8) an Bord des schwimmenden Trägers herzustellen; daß der Schritt (b) darin besteht, die flexible Bedienungsrohrleitung (8) abzurollen und abzusenken, bis das freie Ende der zu verlegenden flexiblen Rohrleitung (17) auf dem Boden ruht, wobei auf diesen Schritt zwei Zwischenschritte folgen, die darin bestehen, die Flüssigkeit in der zu verlegenden flexiblen Rohrleitung (17) und der flexiblen Bedienungsrohrleitung (8) zunächst unter einen für die Überprüfung vorgegebenen Druck zu setzen, wobei die letztere Leitung vorab mit Flüssigkeit gefüllt wurde, und dann die Druckbeständigkeitsüberprüfung während einer vorgegebenen Dauer auszuführen, um die Unversehrtheit und das Anpassungsvermögen der zu verlegenden flexiblen Rohrleitung (17) zu überprüfen; daß der Schritt (c) darin besteht, die zwei flexiblen Rohrleitungen (17 und 8) am Boden voneinander zu trennen, und daß dem Schritt (d) das Zurückziehen der flexiblen Bedienungsrohrleitung zurück an Bord des schwimmenden Trägers vorangeht.

7. Verfahren nach Anspruch 5 zum Verlegen einer flexiblen Rohrleitung mit einer Überprüfung der Innendruckfestigkeit, **dadurch gekennzeichnet**, daß dem Schritt (a) Vorbereitungsschritte vorangehen, die daraus bestehen, zunächst die zu verlegende flexible Rohrleitung (17) abzurollen und teilweise auf dem Boden zu verlegen, wobei die genannte zu verlegende flexible Rohrleitung (17) ganz mit Flüssigkeit gefüllt ist, dann die Weiterbewegung des schwimmenden Trägers und das Abrollen der genannten zu verlegenden flexiblen Rohrleitung (17) anzuhalten, wobei ihr freies Ende an Bord des schwimmenden Trägers zugänglich bleibt; daß der Schritt (a) darin besteht, die Verbindung zwischen der zu verlegenden flexiblen Rohrleitung (17) und der flexiblen Bedienungsrohrleitung (8) an Bord des schwimmenden Trägers herzustellen; daß der Schritt (b) darin besteht, die flexible Bedienungsleitung (8) abzurollen und abzusenken, bis das freie Ende der zu verlegenden flexiblen Rohrleitung (17) auf dem Boden ruht, auf welchen Schritt zwei Zwischenschritte folgen, die darin bestehen, zunächst die Flüssigkeit in der zu verlegenden flexiblen Rohrleitung (17) und der flexiblen Bedienungsrohrleitung (8) unter den für die Überprüfung vorgegebenen Druck zu setzen, wobei die letztere Leitung vorab mit Flüssigkeit gefüllt wurde, und anschließend die Druckbeständigkeitsüberprüfung während einer vorgegebenen Dauer auszuführen, um die Unbeschädigtheit und das Formanpassungsvermögen der zu verlegenden flexiblen Rohrleitung (17) zu überprüfen; daß dem Schritt (c) Zwischenschritte vorangehen, die darin bestehen, zunächst den Druck in den flexiblen Rohrleitungen (17 und 8) abzubauen und anschließend die flexible Bedienungsrohrleitung (8) mit Hilfe von Zugausübungseinrichtungen (35) wieder hochzuziehen, wobei die zu verlegende flexible Rohrleitung (17) an der flexiblen Bedienungsleitung (8) aufgehängt bleibt; und daß der Schritt (c) darin besteht, die zwei flexiblen Rohrleitungen (17 und 8) an Bord des schwimmenden Trägers voneinander zu trennen.

8. Verfahren nach Anspruch 1 zum Verlegen einer flexiblen Rohrleitung am Meeresboden, **dadurch gekennzeichnet**, daß die zu verlegende flexible Rohrleitung (17) abgerollt und verlegt wird, ohne daß sie mit Flüssigkeit gefüllt ist, so daß sie angefüllt mit Luft bleibt, und daß, vor dem Ausführen des Schritts (c), ein Zwischenschritt ausgeführt wird, der darin besteht, die zu verlegende flexible Rohrleitung (17) ebenso wie die flexible Bedienungsrohrleitung (8) mit Flüssigkeit zu füllen.

9. Verfahren nach Anspruch 8, **dadurch gekennzeichnet**, daß der Zwischenschritt des Füllens der zwei flexiblen Rohrleitungen (17 und 8) vor dem Schritt (b) ausgeführt wird.

10. Verfahren nach Anspruch 5 zum Verlegen einer flexiblen Rohrleitung mit einer Überprüfung der Innendruckfestigkeit, bei dem die zu verlegende flexible Rohrleitung (17) gefüllt mit Luft abgerollt und verlegt wird, **dadurch gekennzeichnet**, daß vor dem Ausführen einer Überprüfung auf Innendruckfestigkeit die genannte zu verlegende flexible Rohrleitung (17) gemäß einem der Ansprüche 8 oder 9 mit Flüssigkeit gefüllt wird, daß dem Schritt (a) Vorbereitungsschritte vorangehen, die darin bestehen, zunächst die zu verlegende flexible Rohrleitung (17) abzurollen und teilweise auf dem Boden zu verlegen, und dann die Weiterbewegung des schwimmenden Trägers und das Abrollen der genannten zu verlegenden flexiblen Rohrleitung (17) anzuhalten, wobei deren freies Ende an Bord des schwimmenden Trägers zugänglich bleibt; daß der Schritt (a) darin besteht, die Verbindung zwischen der zu verlegenden flexiblen Rohrleitung (17) und der Bedienungsrohrleitung (8) an Bord des schwimmenden Trägers herzustellen; daß der Schritt (b) darin besteht, die flexible Bedienungsleitung (8) abzurollen und abzusenken, bis das freie Ende der zu verlegenden flexiblen Rohrleitung (17) auf dem Boden ruht, und diesem Schritt zwei Zwischenschritte folgen, die darin bestehen, zunächst die in der zu verlegenden flexiblen Rohrleitung (17) wie auch der flexiblen Bedienungsrohrleitung (8) enthaltene Flüssigkeit unter einen für die Überprüfung bestimmten Druck zu setzen, wobei die letztere Leitung vorab mit Flüssigkeit gefüllt wurde, und anschließend die Druckbeständigkeitsüberprüfung während einer vorgegebenen Dauer auszuführen, um die Unversehrtheit und das Formanpassungsvermögen der zu verlegenden flexiblen Rohrleitung (17) zu überprüfen; daß der Schritt (c) darin besteht, die zwei flexiblen Rohrleitungen (17 und 8) am Boden voneinander zu trennen; und daß dem Schritt (d) das Wiederanheben der flexiblen Bedienungsrohrleitung (8) an Bord des schwimmenden Trägers vorangeht.

11. Verfahren zum Verlegen einer flexiblen Rohrleitung mit einer Überprüfung für die Innendruckfestigkeit, nach Anspruch 5, wobei die zu verlegende flexible Rohrleitung (17) gefüllt mit Luft abgerollt und verlegt wird, **dadurch gekennzeichnet**, daß die genannte zu verlegende flexible Rohrleitung (17) vor dem Ausführen einer Druckbeständigkeitsüberprüfung gemäß einem der Ansprüche 8 oder 9 mit Flüssigkeit gefüllt wird; daß dem Schritt (a) Vorbereitungsschritte vorangehen, die darin bestehen, zunächst die zu verlegende flexible Rohrleitung (17) abzurollen und teilweise auf dem Boden zu verlegen, und anschließend die Weiterbewegung des schwimmenden Trägers und das Abrollen der zu verlegenden flexiblen Rohrleitung (17) anzuhalten, wobei deren freies Ende an Bord des schwimmenden Trägers zugänglich bleibt; daß der Schritt (a) darin besteht, die Verbindung zwischen der zu verlegenden flexiblen Rohrleitung (17) und der Bedienungsleitung (8) an Bord des schwimmenden Trägers herzustellen; daß der Schritt (b) darin besteht, die flexible Bedienungsleitung (8) abzurollen und abzusenken, bis das freie Ende der zu verlegenden flexiblen Rohrleitung (17) auf dem Boden ruht, und diesem Schritt zwei Zwischenschritte folgen, die darin bestehen, zunächst die in der zu verlegenden flexiblen Rohrleitung (17) und der Bedienungsleitung (8) enthaltene Flüssigkeit unter einen für die Überprüfung vorgegebenen Druck zu setzen, wobei die letztere Leitung vorab mit Flüssigkeit gefüllt wurde, und dann die Druckbeständigkeitsüberprüfung während einer vorgegebenen Dauer auszuführen, um die Unversehrtheit und das Formanpassungsvermögen der zu verlegenden flexiblen Rohrleitung (17) zu überprüfen; daß dem Schritt (c) Zwischenschritte vorangehen, die darin bestehen, zunächst den Druck in den flexiblen Rohrleitungen (17 und 8) abzubauen und anschließend die flexible Bedienungsleitung (8) mit Hilfe von Zugausübungseinrichtungen (35) wieder zurückzuziehen, wobei zu verlegende flexible Rohrleitung (17) an der flexiblen Bedienungsleitung (8) aufgehängt bleibt, und daß dieser Schritt (c) an Bord des schwimmenden Trägers ausgeführt wird.

12. Verfahren nach einem der Ansprüche 1 bis 11, **dadurch gekennzeichnet**, daß das Verhältnis des Innendurchmessers der zu handhabenden flexiblen Rohrleitung (17) und desjenigen der flexiblen Bedienungsrohrleitung (8) zwischen 2 und 12, vorzugsweise zwischen 3 und 8 liegt.

## Claims

1. A process for handling tubular flexible conduits in a section of water above a seabed (15) from a floating support (7), wherein a recoverable flexible tubular operating conduit (8) is used, having characteristics different from those of the flexible tubular conduit (17) to be handled, the said flexible tubular operating conduit (8) having a sufficient mechanical strength for resisting, on the one hand, the combined action of the highest internal pressure which the flexible tubular conduit (17) to be handled must withstand and of the axial tensile force corresponding to the apparent weight in water of the length of the flexible tubular operating conduit (8) which is suspended between the floating support and the bottom and, on the other hand, the isolated action of the axial tensile force corresponding to the apparent weight in water of the length of the flexible tubular conduit (17) to be handled when this latter is suspended between the floating support and the bottom by means of the flexible operating conduit (8), and the said process including the successive steps lying in :
a) joining one end of the flexible tubular operating conduit (8) by mechanical connecting means (18) to a free and accessible end of the flexible tubular conduit (17) to be handled,
b) ensuring the longitudinal displacement of the flexible tubular operating conduit (8) by tensioning means (35) installed on the floating laying support, so that the free end of the flexible tubular conduit (17) to be handled connected to the flexible operating conduit (8) passes vertically through the depth of the section of water, the weight of the flexible tubular conduit (17) to be handled remaining supported by the flexible tubular operating conduit (8),
c) disconnecting the flexible tubular operating conduit (8) from the free end of the flexible tubular conduit (17) to be handled,
d) recovering the flexible operating conduit ((8) for subsequent use.

2. A process according to claim 1, characterized in that the same tensioning means (35) are used for ensuring the operation and taking up of the tensile forces, on the one hand, of the flexible tubular conduit (17) to be handled and, on the other hand, of the flexible tubular operating conduit (8), the said tensioning means being of the linear winch type.

3. A process according to claim 1 or 2 for leaving a flexible tubular conduit on the seabed, characterized in that the step (a) is preceded by a preliminary step lying in stopping the progress of the floating laying support; that the step (a) lies in effecting on board the floating support, the connection of the flexible tubular operating conduit (8) and of the tubular flexible conduit (17) to be left behind; that the step (b) lies in unrolling the flexible operating conduit (8), so as to lower from the floating laying support to the bottom, the free end of the flexible tubular conduit (17) which is to be left suspended on the flexible operating conduit (8); that the step c) of the disconnection is carried out on the bottom. and that the step d) is preceded by raising the flexible tubular operating conduit (8) on board the floating support.

4. A process according to claim 1 or 2 for recovering a flexible tubular conduit (17) lying on the seabed, characterized in that the step (a) is preceded by a preliminary step lying in lowering the end to be connected of the flexible tubular operating conduit (8) to the level of the bottom; that the step (a) lies in connecting at the level of the bottom the said end of the flexible operating conduit (8) to the free end of the flexible tubular conduit (17) to be recovered; that the step (b) lies in raising the free end of the tubular flexible conduit (17) to be recovered on board the floating laying support, the flexible tubular conduit (17) to be recovered remaining suspended on the flexible tubular operating conduit (8) while the flexible tubular operating conduit (8) is held and raised by the tensioning means (35); and that the step (c) is effected on board the floating support.

5. A process according to claim 1 or 2, characterized in that, during the connection between the flexible tubular conduit (17) to be handled and the flexible tubular operating conduit (8), a hydraulic connection (26) which connects the internal ducts of the two conduits is placed into position.

6. A process according to claim 5 for the laying, with a test of the resistance to the internal pressure of a flexible tubular conduit, characterized in that the step (a) is preceded by preliminary steps lying in first unrolling and partly laying on the bottom the flexible tubular conduit (17) to be laid, the said flexible tubular conduit (17) to be laid being laid when filled with liquid, water in particular, then stopping the progress of the floating laying support and unrolling the said flexible tubular conduit (17), its free end remaining accessible on board the floating support; that the step (a) lies in effecting the connection of the flexible tubular conduit (17) to the flexible tubular operating conduit (8) on board the floating support; that the step (b) lies in unrolling and lowering the flexible tubular operating conduit (8) until the free end of the flexible tubular conduit (17) to be laid lies on the bottom, and that it is followed by two intermediate steps lying in first pressurizing the liquid contained in the flexible tubular conduit (17) to be laid and in the flexible tubular operating conduit (8) to a specified pressure for the test, the latter having been previously filled with liquid, then proceeding with the resistance test to the pressure for a specified period so as to check the integrity and the conformity of the flexible tubular conduit (17) to be laid; that the step (c) lies in separating the two flexible tubular conduits (17) and (8) on the bottom; and that the step (d) is preceded by raising the flexible tubular operating conduit (8) on board the floating support.

7. A process according to claim 5 for the laying with a test of the resistance to the internal pressure of a tubular flexible conduit, characterized in that the step (a) is preceded by preliminary steps lying in first unrolling and partly laying on the bottom the flexible tubular conduit (17) to be laid, the said flexible tubular conduit (17) to be laid being laid filled with liquid, then stopping the progress of the floating support and the unrolling of the said flexible tubular conduit (17) to be laid, its free end remaining accessible on board the floating support; that the step (a) lies in effecting the connection of the flexible tubular conduit (17) to be laid and of the flexible tubular operating conduit (8) on board the floating support; that the step (b) lies in unrolling and lowering the flexible operating conduit (8) until the free end of the flexible tubular conduit (17) to be laid lies on the bottom, and that it is followed by two intermediate steps lying in first pressurizing the liquid contained in the flexible tubular conduit (17) to be laid and in the flexible tubular operating conduit (8) to a specified pressure for the test, the latter having been previously filled with liquid, then proceeding with the test of the resistance to pressure for a specified period so as to check the integrity and conformity of the flexible tubular conduit (17) to be laid; that the step (c) is preceded by intermediate steps which lie in first depressurizing the flexible tubular conduits (17) and (8), then raising the flexible tubular operating conduit (8) by means of the tensioning means (35), the flexible tubular conduit (17) to be laid remaining suspended on the flexible tubular operating conduit (8); and that this step (c) lies in disconnecting the two flexible tubular conduits (17) and (8) on board the floating support.

8. A process according to claim 1 for the laying of a flexible tubular conduit on the seabed, characterized in that the flexible tubular conduit (17) to be laid is unrolled and laid without being filled with liquid, thus remaining filled with air; and that prior to effecting step (c) one proceeds with a preliminary step lying in filling the flexible tubular conduit (17) to be laid, as well as the flexible tubular operating conduit (8), with liquid.

9. A process according to claim 8, characterized in that the preliminary step of filling the two flexible tubular conduits (17) and (8) is effected prior to the step (b).

10. A process according to claim 5 for the laying, with a test of the resistance to the internal pressure of a flexible tubular conduit, the flexible tubular conduit (17) to be laid being unrolled and laid when filled with air, characterized in that, prior to effecting a test of the resistance to the internal pressure, the said flexible tubular conduit (17) to be laid is filled with liquid in accordance with claim 8 or 9; that the step (a) is preceded by preliminary steps lying in first unrolling and partly laying on the bottom the flexible tubular conduit (17) to be laid, then stopping the progress of the floating support and the unrolling of the said flexible tubular conduit (17) to be laid, its free end remaining accessible on board the floating support; that the step (a) lies in effecting the connection of the flexible tubular conduit (17) to be laid and of the flexible tubular operating conduit (8) on board the floating support, that the step (b) lies in unrolling and lowering the flexible operating conduit (8) until the free end of the flexible tubular conduit (17) to be laid lies on the bottom, and that it is followed by two intermediate steps lying in first pressurizing the liquid contained in the flexible tubular conduit (17) to be laid, as well as in the flexible tubular operating conduit (8), to a specified pressure for the test, the latter having been previously filled with liquid, then proceeding with the test of the resistance to pressure for a specified period so as to check the integrity and conformity of the flexible tubular conduit (17) to be laid; that the step (c) lies in separating the two flexible tubular conduits (17) and (8) on the bottom; and that the step (d) is preceded by raising the flexible tubular operating conduit (8) on board the floating support.

11. A process for the laying, with a test of the resistance to the internal pressure of a tubular flexible conduit according to claim 5, the flexible tubular conduit (17) to be laid being unrolled and laid when filled with air, characterized in that prior to effecting a test of the resistance to pressure, the said flexible tubular conduit (17) to be laid is filled with liquid in accordance with claim 8 or 9; that the step (a) is preceded by preliminary steps lying in first unrolling and partly laying on the bottom the flexible tubular conduit (17) to be laid, then stopping the progress of the floating support and the unrolling of the flexible tubular conduit (17) to be laid, its free end remaining accessible on board the floating support; that the step (a) lies in effecting the connection of the flexible tubular conduit (17) to be laid and of the flexible tubular operating conduit (8) on board the floating support; that the step (b) lies in unrolling and lowering the flexible operating conduit (8) until the free end of the flexible tubular conduit (17) to be laid lies on the bottom, and that it is followed by two intermediate steps lying in first pressurizing the liquid contained in the flexible tubular conduit (17) and in the flexible tubular operating conduit (8) to a specified pressure for the test, the latter having been previously filled with liquid, then proceeding with the test of the resistance to the pressure for a specified period so as to check the integrity and conformity of the flexible tubular conduit (17) to be laid; that the step (c) is preceded by intermediate steps which lie in first depressurizing the flexible tubular conduits (17) and (8), then raising the flexible operating conduit (8) by means of the tensioning means (35), the flexible tubular conduit (17) to be laid remaining suspended on the flexible operating conduit (8): and that this step (c) is effected on board the floating support.

12. A process according to any one of claims 1 to 11, characterized in that the ratio of the internal diameter of the flexible tubular conduit (17) to be handled and of the flexible tubular operating conduit (8) is comprised between 2 and 12, preferably between 3 and 8.
